# EUROPEAN PATENT APPLICATION

(11) **EP 2 090 956 A2**
(43) Date of publication of application: **19.08.2009**
(21) Application number: 09002076.9
(22) Date of filing: 13.02.2009
(51) Int. Cl.: G06F 1/18

(54) **Computer apparatus**

(30) Priority: 14.02.2008 TW 97202715 U
(71) Applicant: SilverStone Technology Co., Ltd., Zhonghe City, Taipei County 235 (TW)
(72) Inventor: Chi, Yen-Shu, Zhonghe City Taipei County 235 (TW)
(74) Representative: TER MEER - STEINMEISTER & PARTNER GbR

(57) **Abstract**

A computer apparatus includes a chassis (10), a motherboard (20), an input/output port connector (30), an expansion card (40) and a cooling fan (50). The chassis (10) includes a top panel (12) with at least one opening (122) and at least one slot (123) formed thereon and a bottom panel (11) with a plurality of apertures (112) formed thereon. The motherboard (20) is mounted inside the chassis (10) and is adjacent to the top panel (12). The motherboard (20) includes an expansion socket (21) and a plurality of heat-generated electronic devices (21). The I/O port connector (30) is connected to a side of motherboard (20) and protrudes through the opening (122). The expansion card (40) is accommodated in the expansion socket (21) and protrudes through the slot (123). The expansion card (40) is perpendicular to both the top panel (12) and the motherboard (20). The cooling fan (50) is arranged on the bottom panel (11) and is located above the apertures (112).

## Description

### BACKGROUND OF THE INVENTION

### 1. Field of the Invention

The present invention relates to a computer apparatus, and more particularly relates to an integrated computer apparatus.

### 2. Description of Related Art

A conventional computer apparatus usually includes a chassis, a motherboard and an input/output (I/O) port connector. The chassis may consist of a frame, a front panel and a rear panel both mounted on the frame. The motherboard is arranged in the chassis and is adjacent to the rear panel. An opening is formed on the rear panel. The input/output port connector is connected to a side of the motherboard and protrudes through the opening. The I/O port connector is used to connect to a peripheral device such as a monitor, a TV, a printer, a mouse or a USB flash drive.

However, in above-mentioned computer apparatus, a user has to move himself or the computer to an appropriate position when he wants to directly view the opening on the rear panel. In this way, he can perform the connections between the I/O port connector and peripheral devices easily. Hence, it's an issue to the computer designer to study how to make the performing of connections more convenient for the user.

### SUMMARY OF THE INVENTION

It is a subject of the present invention to a computer apparatus which has the advantage of easily performing of connections between the I/O port connectors and peripheral devices.

It is another subject of the present invention to a computer apparatus which has the advantage of better heat dissipation efficiency.

Accordingly, the invention provides a computer apparatus. The computer apparatus includes a chassis, a motherboard, an input/output port connector, an expansion card and a cooling fan. The chassis includes a top panel with at least one opening and at least one slot formed thereon. The chassis also includes a bottom panel with a plurality of apertures formed thereon. The motherboard is mounted inside the chassis and is adjacent to the top panel. The motherboard includes an expansion socket and a plurality of heat-generated electronic devices. The I/O port connector is connected to a side of motherboard and protrudes through the opening. The expansion card is accommodated in the expansion socket and protrudes through the slot. The expansion card is perpendicular to both the top panel and the motherboard. The cooling fan is arranged on the bottom panel and is located above the apertures.

Therefore, exterior air may be draw through the apertures by the cooling fan and may flow into the chassis. Such that, the heat generated from the heat-generated electronic devices, the I/O port connector and the expansion card can be removed by the air flowed from the apertures. Then the air may flow out of the chassis through the opening and the slot on the top panel.

This invention provides the computer apparatus with the openings formed on the top panel of the chassis so as to make the performing of connections between the I/O port connectors and peripheral devices become much easier to a user.

Besides, the heat generated from the heat-generated electronic devices, the I/O port connector and the expansion card can be removed by air flow which is generated by the cooling fan.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a perspective view of a computer apparatus according to the first embodiment of the present invention;

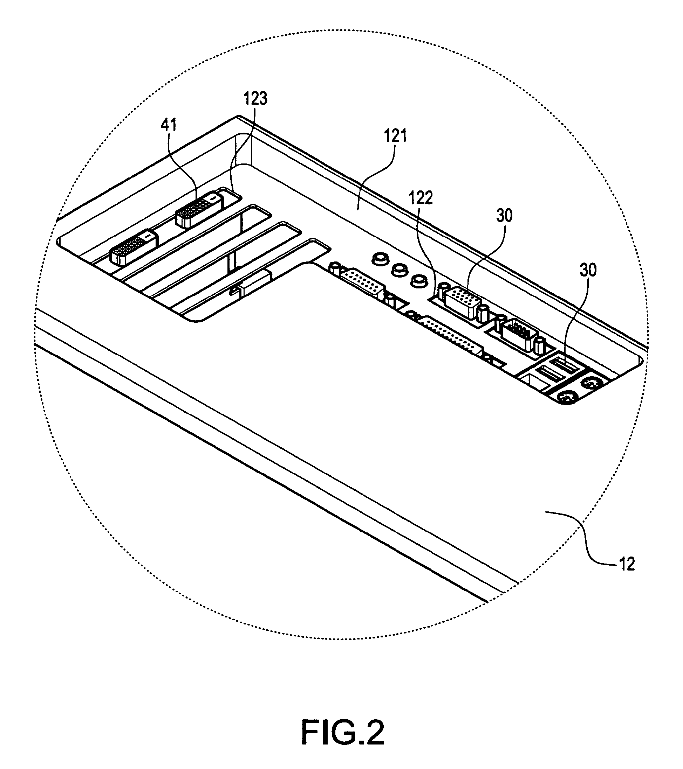

Fig. 2 shows an enlarged view of the computer apparatus in Fig.1;

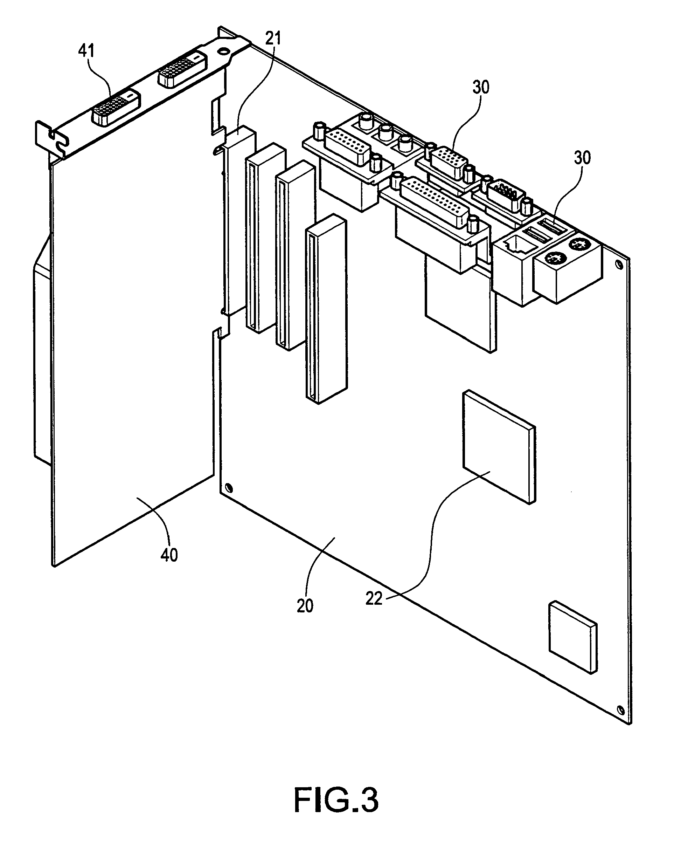

Fig. 3 shows a perspective view of a motherboard electrically connected with an expansion card;
Fig. 4 shows a perspective view of the computer apparatus according to the first embodiment of the present invention;
Fig. 5 shows a perspective view of a computer apparatus according to the second embodiment of the present invention; and
Fig. 6 shows a perspective view of the computer apparatus according to the second embodiment of the present invention.

### DETAILED DESCRIPTION OF THE INVENTION

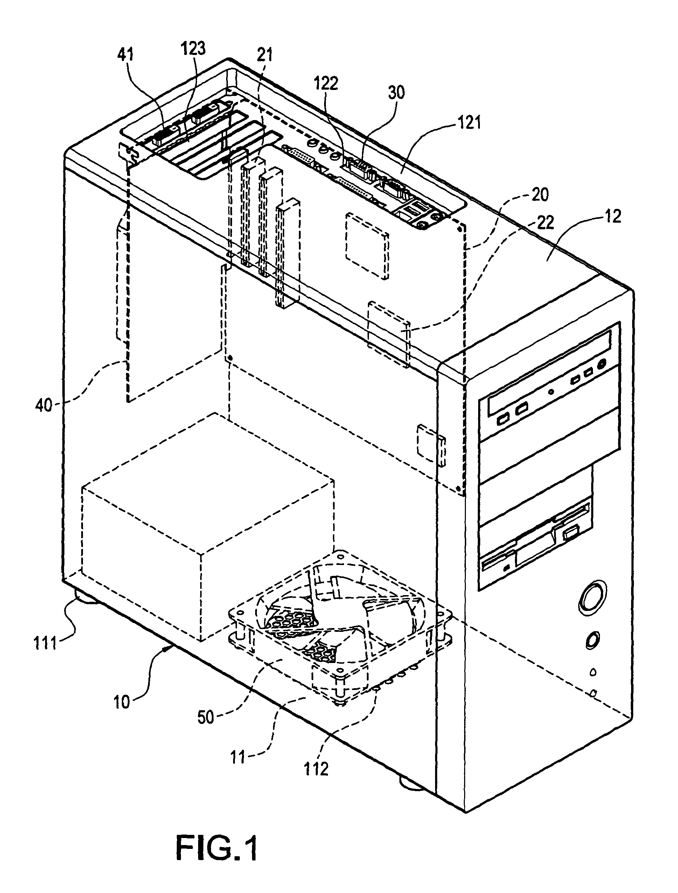

Fig. 1 shows the first embodiment of a computer apparatus of the present invention. The computer apparatus mainly includes a chassis 10, a motherboard 20, an I/O port connector 30, an expansion card 40 and a cooling fan 50.

The chassis 10 includes a frame (not shown), a top panel 12 and a bottom panel 11 respectively mounted on the top side and the bottom side of the frame. A plurality of supporting rods 111 are arranged on the bottom face of the bottom panel 11. A plurality of apertures 112 are formed on the bottom panel 11.

A recess portion 121 is concavely formed on the top panel 12. A plurality of openings 122 and a plurality of slots 123 are formed in the recess portion 121. The recess portion 121 is of L-shaped but not limited to.

The motherboard 20 is mounted inside the chassis 10 and is adjacent to the top panel 12. The motherboard 20 includes an expansion socket 21 and a plurality of heat-generated electronic devices 22. The expansion socket 21 may be an AGP socket or a PCI socket. The heat-generated electronic devices 22 may be a CPU or a memory but not limited to.

The I/O port connector 30 is connected to a side of motherboard 20 and protrudes through the opening 122. The I/O port connector 30 may be a USB port connector, a PS/2 port connector, a RS232 port connector, a VGA port connector, a DVI port connector or an earphone/microphone port connector.

The expansion card 40 is accommodated in the expansion socket 21 and protrudes through the slot 123. The expansion card 40 is perpendicular to both the top panel 12 and the motherboard 20. The expansion card 40 has at least one I/O port connector 41 protruded through the slot 123.

The cooling fan 50 is arranged on the bottom panel 11 and is located above the apertures 112. The cooling fan 50 is a axial flow fan.

Those I/O port connectors 30, 41 can be connected to a peripheral device (not shown, such as a monitor, a TV, a printer, a mouse, a USB flash drive, an earphone or a microphone).

Since user can easily and directly view those the I/O port connectors 30, 41 protruded through those openings 122 and slots 123 on the top panel 12. This facilitates the operation to establish connections between the I/O port connectors 30, 41 and the peripheral device. Consequently, the present invention indeed makes the performing of connections between the I/O port connectors 30, 41 and the peripheral device much easier to user.

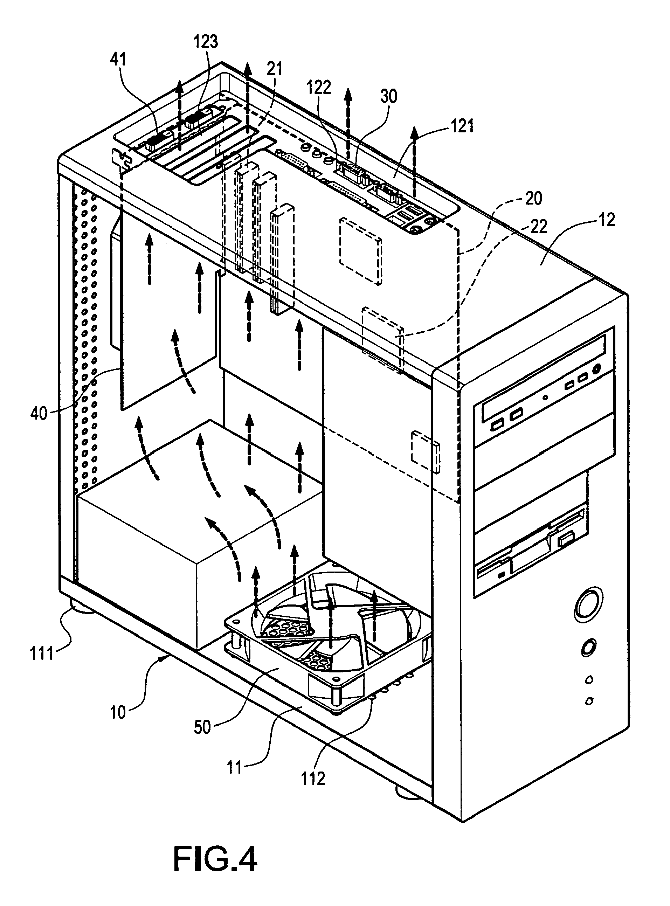

Besides, as Fig.4 shows, exterior air may be draw through the apertures 112 of the bottom panel 11 by the cooling fan 50 and may flow into the chassis 10. The heat generated from the heat-generated electronic devices 22, the I/O port connector 30, 41 and the expansion card 40 can be removed by air flow which is generated by the cooling fan 50. Thus, the computer apparatus of the present invention has the advantage of better heat dissipation efficiency.

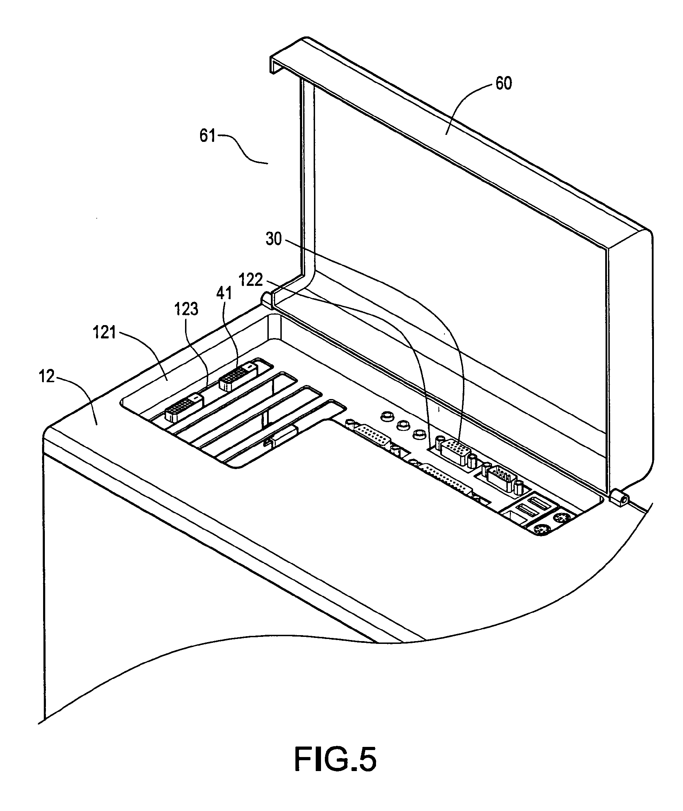

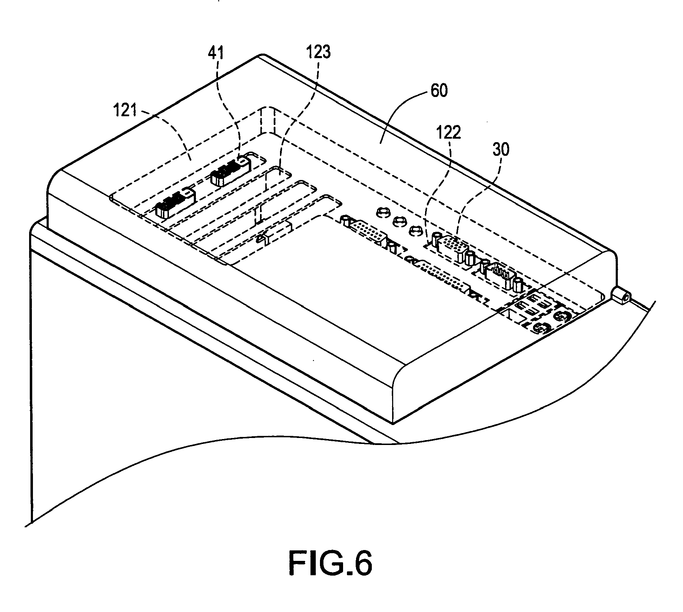

In the second embodiment of the present invention, as Fig.5 and Fig.6 show, the computer apparatus further includes a dust proof cover 60 pivotly attached on the top panel 12. The dust proof cover 60 is correspondingly arranged on the recess portion 121 of the top panel 12 to prevent dusts or particles from entering the recess portion 121, so as to avoid affecting the connecting performance of the I/O port connectors 30, 41 or the operation of the motherboard 20. A wire outlet 61 is formed on the dust proof cover 60. The wire outlet 61 is provided as a passageway for the wires to connect with the I/O port connectors 30, 41 and peripheral devices, when the dust proof cover 60 is closed.

## Claims

1. A computer apparatus, comprising:
a chassis (10) comprising a bottom panel (11) with a plurality of apertures (112) formed thereon and a top panel (12) with at least one opening (122) and at least one slot (123) formed thereon;
a motherboard (20) mounted inside the chassis (10) and being adjacent to the top panel (12), the motherboard (20) comprising an expansion socket (21) and a plurality of heat-generated electronic devices (22);
an I/O port connector (30) connected to a side of motherboard (20) and protruding through the opening (122);
an expansion card (40) accommodated in the expansion socket (21) and protruding through the slot (123); and
a cooling fan (50) arranged on the bottom panel (11) and located above the apertures (112).

2. The computer apparatus in claim 1, wherein a recess portion (121) for locating the opening (122) and the slot (123) is formed on the top panel (12).

3. The computer apparatus in claim 1, wherein the expansion card (40) comprises at least one I/O port connector (41) protruded through the slot (123).

4. The computer apparatus in claim 1, further comprising a dust proof cover (60) pivotly attached on the top panel (12) and correspondingly arranged on the recess portion (121).

5. The computer apparatus in claim 4, wherein a wire outlet (61) used for passing a wire connected to the I/O port connector (30) is formed on the dust proof cover (60).

6. The computer apparatus in claim 1, wherein the I/O port connector (30) is a USB port connector.

7. The computer apparatus in claim 1, wherein the I/O port connector (30) is a PS/2 port connector.

8. The computer apparatus in claim 1, wherein the I/O port connector (30) is an RS232 port connector.

9. The computer apparatus in claim 1, wherein the I/O port connector (30) is a VGA port connector.

10. The computer apparatus in claim 1, wherein the primary I/O port connector (30) is a DVI port connector.

11. The computer apparatus in claim 1, wherein the primary I/O port connector (30) is an earphone port connector or a microphone port connector.

12. The computer apparatus in claim 1, further comprising a plurality of supporting rods (111) arranged on the bottom face of the bottom panel (11).
